# EUROPEAN PATENT APPLICATION

(11) **EP 4 815 111 A1**
(43) Date of publication of application: **30.09.2026**
(21) Application number: 26162129.6
(22) Date of filing: 03.03.2026
(51) Int. Cl.: H01M 10/613, H01M 10/625, H01M 10/647, H01M 10/653, H01M 10/6555, H01M 10/6556, H01M 10/658, H01M 50/211, H01M 50/22, H01M 50/249, H01M 50/282, H01M 50/291

(54) **BATTERY PACK AND VEHICLE**

(30) Priority: 26.03.2025 JP 2025052227
(71) Applicant: Toyota Jidosha Kabushiki Kaisha, Toyota-shi, Aichi-ken 471-8571 (JP)
(72) Inventor: YANASE, Koichi, Toyota-shi, Aichi-Ken, 471-8571 (JP); ARAKAWA, Takuya, Toyota-shi, Aichi-Ken, 471-8571 (JP); IWATA, Makoto, Toyota-shi, Aichi-Ken, 471-8571 (JP); KIMURA, Kenta, Toyota-shi, Aichi-Ken, 471-8571 (JP); KIMURA, Ryo, Toyota-shi, Aichi-Ken, 471-8571 (JP); TSUNEKAWA, Kunihiro, Toyota-shi, Aichi-Ken, 471-8571 (JP); YAMASHITA, Osamu, Toyota-shi, Aichi-Ken, 471-8571 (JP)
(74) Representative: Cabinet Beau de Loménie

(57) **Abstract**

A battery pack (20) includes at least one battery module (50) and a cooler (34) disposed above the at least one battery module (50). The at least one battery module (50) includes a plurality of pouch-type battery cells (52) and a module casing (56) supporting the plurality of pouch-type battery cells (52) from below, an upper part of the module casing (56) being open.

## Description

### BACKGROUND OF THE INVENTION

### 1. Field of the Invention

The disclosure relates to a battery pack and a vehicle.

### 2. Description of Related Art

Japanese Unexamined Patent Application Publication No. 2017-054807 (JP 2017-054807 A) describes a battery module. The battery module includes a plurality of pouch-type battery cells and a heat exchanger (such as a cooler and a heater) disposed below the plurality of pouch-type battery cells.

### SUMMARY OF THE INVENTION

In battery modules, it is preferable to accommodate pouch-type battery cells in a module casing to protect the pouch-type battery cells from external forces. However, when the pouch-type battery cells are accommodated in the module casing, the module casing is interposed between the pouch-type battery cells and a heat exchanger, so the heat exchange capability (such as cooling capability and heating capability) of the pouch-type battery cells using the heat exchanger decreases. Therefore, it is conceivable to open the lower part of the module casing downward where the heat exchanger is disposed. However, in the module casing of which the lower part is open, it is difficult to sufficiently protect the pouch-type battery cells from external forces applied from below.

The disclosure provides a technology that can achieve both cooling of pouch-type battery cells and protection from external forces.

A first aspect of the disclosure provides a battery pack. The battery pack includes at least one battery module and a cooler disposed above the at least one battery module. The at least one battery module includes a plurality of pouch-type battery cells and a module casing supporting the plurality of pouch-type battery cells from below, an upper part of the module casing being open.

In the above configuration, the module casing supports the pouch-type battery cells from below. With this configuration, the module casing can effectively protect the pouch-type battery cells from external forces applied from below. In addition, the cooler is disposed above the battery module, and the upper part of the module casing is open toward the cooler. With this configuration, the cooler can effectively cool the pouch-type battery cells without being hindered by the module casing. As a result, both cooling of the pouch-type battery cells and protection from external forces are achieved.

In the first aspect, the battery pack may further include a heat transfer material provided between the at least one battery module and the cooler.

In the first aspect, at least one of the plurality of pouch-type battery cells may be in contact with the heat transfer material.

In the first aspect, the at least one battery module may further include a heat transfer plate disposed between the plurality of pouch-type battery cells. An upper part of the heat transfer plate may project upward between the plurality of pouch-type battery cells and may be in contact with the heat transfer material.

In the first aspect, the upper part of the heat transfer plate may have an extended portion that extends along the cooler.

In the first aspect, the extended portion may be inclined relative to a horizontal direction.

In the first aspect, the at least one battery module may include two battery modules adjacent to each other with a space between the two battery modules. The battery pack may further include a heat insulating material provided in a range facing the space on a lower surface of the cooler.

In the first aspect, the battery pack may further include a heat transfer material provided in a range facing the two battery modules on the lower surface of the cooler. A coefficient of thermal conductivity of the heat transfer material may be higher than a coefficient of thermal conductivity of the heat insulating material.

In the first aspect, the battery pack may further include an electric cable disposed in the space and electrically connected to the at least one battery module.

In the first aspect, the battery pack may further include a housing accommodating the two battery modules. A framework member of the housing may be disposed in a clearance between the two battery modules.

A second aspect of the disclosure is a vehicle configured to travel on a road surface. The vehicle includes a vehicle body and a battery pack supported by the vehicle body. The battery pack may adopt any one of the battery packs of the disclosure. In this case, the battery pack is disposed at a lower part of the vehicle body, the lower part being open toward the road surface.

According to the second aspect, unintended external forces may be applied to the battery pack from below due to, for example, contact with a road surface or contact with an obstacle on the road surface. In such a case, all the battery packs of the disclosure can effectively protect the pouch-type battery cells from external forces applied from below.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram that schematically shows the configuration of a vehicle;
FIG. 2 shows the configuration of a battery pack;
FIG. 3 shows a battery module when viewed from above;
FIG. 4 is a cross-sectional view taken along the line IV-IV in FIG. 2;
FIG. 5 is a view of a housing from below;
FIG. 6 shows a cross-sectional view of the battery module;
FIG. 7 shows a modification of a heat transfer plate;
FIG. 8 shows a modification of a heat transfer plate; and
FIG. 9 shows a modification of a heat transfer plate.

### DETAILED DESCRIPTION OF EMBODIMENTS

In an embodiment of the technology, a battery pack may include a heat transfer material provided between a battery module and a cooler. With this configuration, heat generated by pouch-type battery cells in the battery module can be efficiently transferred to the cooler.

In the above-described embodiment, at least one of the plurality of pouch-type battery cells may be in contact with the heat transfer material. With this configuration, heat generated by the pouch-type battery cells in the battery module can be more efficiently transferred to the cooler.

In addition to or instead of the above, the battery module may further include a heat transfer plate disposed between the plurality of pouch-type battery cells. In this case, an upper part of the heat transfer plate may project upward between the plurality of pouch-type battery cells and may be in contact with the heat transfer material. With this configuration, heat generated by the pouch-type battery cells in the battery module can be more efficiently transferred to the cooler.

In the above-described embodiment, the upper part of the heat transfer plate may have an extended portion that extends along the cooler. With this configuration, the heat transfer plate can be brought into contact with the heat transfer material over a larger area. As a result, heat generated by the pouch-type battery cells can be more efficiently transferred to the cooler.

In the above-described embodiment, the extended portion may be inclined relative to a horizontal direction. With this configuration, water droplets that have condensed at the extended portion or water droplets that have condensed on the cooler can be collected at specific locations by the slope of the extended portion. As a result, falling of water droplets caused by condensation from the extended portion or falling of the water droplets from the extended portion to unintended locations can be avoided or suppressed.

In one embodiment of the technology, at least one battery module may include two battery modules adjacent to each other with a space between the two battery modules. In this case, the battery pack may include a heat insulating material provided in a range facing the space on a lower surface of the cooler. With this configuration, unnecessary heat absorption to the cooler is reduced in the range where the heat insulating material is provided. As a result, the cooling capacity of the cooler can be relatively increased in the range facing the battery module. Condensation on the cooler is also reduced in the range where the heat insulating material is provided.

In addition to the above, the battery pack may include a heat transfer material provided in a range facing the two battery modules on the lower surface of the cooler. In this case, a coefficient of thermal conductivity of the heat transfer material may be higher than a coefficient of thermal conductivity of the heat insulating material. With this configuration, in the range facing the two battery modules, heat generated by the pouch-type battery cells can be more efficiently transferred to the cooler. As a result, the cooling capacity of the cooler can be further increased.

In addition to or instead of the above, the battery pack may include an electric cable disposed in the space between the two battery modules and electrically connected to at least one battery module. Condensation is also suppressed in the range where the heat insulating material is provided on the lower surface of the cooler. Therefore, when the electric cable is disposed below the range where the heat insulating material is provided, falling of water droplets that have condensed on the cooler to the electric cable can be avoided or suppressed.

In addition to or instead of the above, the battery pack may further include a housing accommodating the two battery modules. In this case, a framework member of the housing may be disposed in a clearance between the two battery modules. The framework member disposed between the two battery modules experiences an increase in temperature due to heat transferred from the battery modules. The framework member that is high in temperature heats a heat medium flowing through the cooler, which may reduce the cooling capacity of the cooler for the battery modules. In this regard, when the heat insulating material is provided in the range facing the framework member on the lower surface of the cooler, heating of the heat medium flowing through the cooler by the high-temperature framework member is suppressed.

### Embodiment

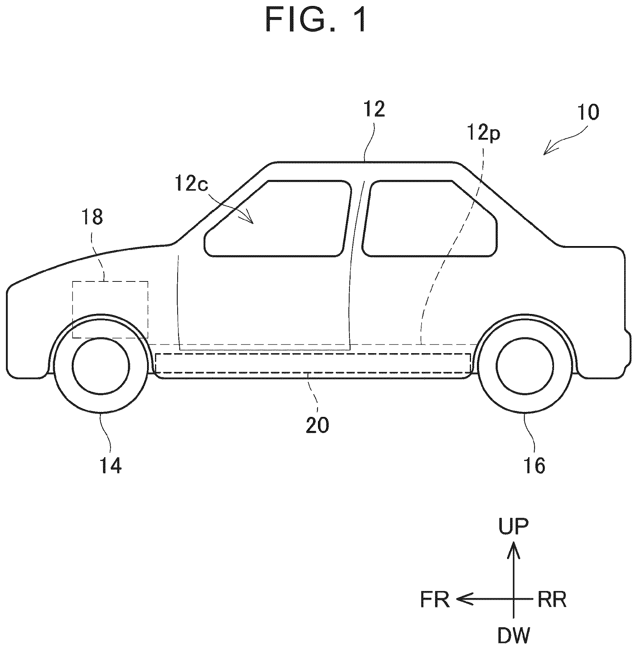

A battery pack 20 and a vehicle 10 according to an embodiment will be described with reference to the accompanying drawings. The battery pack 20 of the present embodiment can be mounted on the vehicle 10. The vehicle 10 will be described with reference to FIG. 1. The vehicle 10 is an electrified vehicle and is a battery electric vehicle (BEV). However, the vehicle 10 is not limited to a BEV and may also be another type of electrified vehicle, such as a hybrid electric vehicle (HEV) and a plug-in hybrid electric vehicle (PHEV).

Here, the directions in the specification and drawings correspond to the directions within the vehicle 10. In the drawings, the direction FR indicates a front side in a front and rear direction of the vehicle 10, and the negative direction RR of the direction FR indicates a rear side in the front and rear direction of the vehicle 10. The direction LH indicates a left-hand side in a right and left direction of the vehicle 10, and the negative direction RH of the direction LH indicates a right-hand side in the right and left direction of the vehicle 10. The direction UP indicates an upside in an up and down direction of the vehicle 10, and the negative direction DW of the direction UP indicates a downside in the up and down direction of the vehicle 10.

The vehicle 10 includes a vehicle body 12, a plurality of wheels 14, 16, and a motor unit 18 in addition to the battery pack 20. The vehicle body 12 is formed of a metal, such as a steel-based material and an aluminum-based material. The wheels 14, 16 support the vehicle body 12. The wheels 14, 16 include a pair of the front wheels 14 located at the front of the vehicle body 12 and a pair of the rear wheels 16 located at the rear of the vehicle body 12. The front wheels 14 are respectively located on the right and left sides of the vehicle body 12. The rear wheels 16 are located on the right and left sides of the vehicle body 12. The vehicle body 12 has a cabin 12c inside. The cabin 12c is configured to be capable of accommodating occupants. The vehicle body 12 has a floor panel 12p. The floor panel 12p defines the floor of the cabin 12c.

The motor unit 18 includes a drive motor that drives the front wheels 14. However, the motor unit 18 is not limited to driving the front wheels 14 and may be configured to drive at least one of the wheels 14, 16. The motor unit 18 may be disposed forward of the cabin 12c.

The battery pack 20 is electrically connected to the motor unit 18 via, for example, a power converter (not shown). The battery pack 20 supplies the motor unit 18 with electric power for driving the wheels 14, 16. The battery pack 20 is disposed at a lower part of the vehicle body 12. Specifically, the battery pack 20 is disposed below the floor panel 12p of the vehicle body 12. The battery pack 20 is supported by the vehicle body 12. For example, the battery pack 20 may be fixed to the right and left side sills (not shown) of the vehicle body 12.

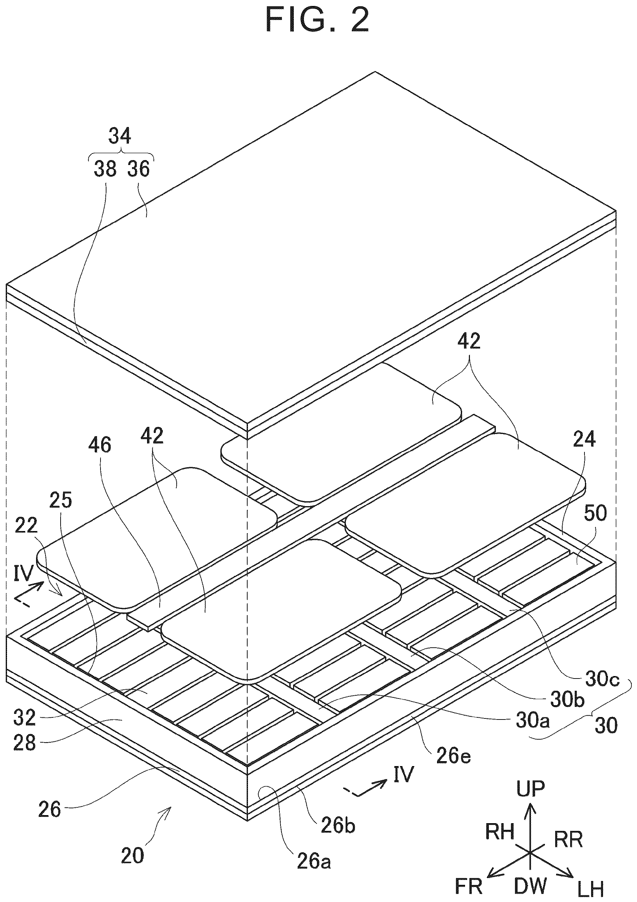

The details of the battery pack 20 will be described with reference to FIG. 2 to FIG. 6. As shown in FIG. 2, the battery pack 20 is a thin battery pack with a small dimension in the up and down direction. The battery pack 20 has a flat rectangular parallelepiped shape. The dimension of the battery pack 20 in the up and down direction is smaller than the dimension of the battery pack 20 in the front and rear direction.

The battery pack 20 includes a plurality of battery modules 50, a housing 22, a cooler (heat exchanger) 34, a plurality of heat transfer materials 42, a heat insulating material 46, and a protective panel 44. The housing 22 accommodates the battery modules 50. However, in a modification, a battery pack does not need to include the protective panel 44. In another modification, a battery pack does not need to include the heat transfer materials 42 and does not need to include the heat insulating material 46.

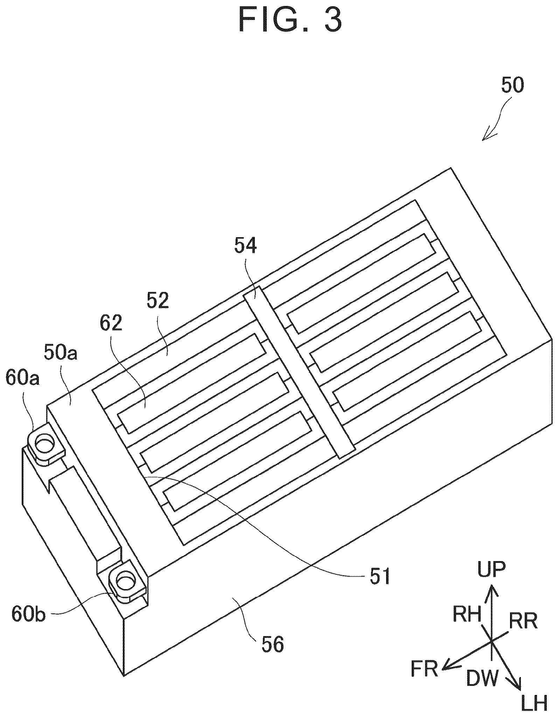

As shown in FIG. 3, the battery module 50 includes a plurality of battery cells 52. In a modification, the battery module 50 may include only one battery cell 52. Each battery cell 52 is a secondary battery cell configured to be chargeable and dischargeable. The secondary battery cell is, for example, a lithium ion battery cell. The battery module 50 has an opening 51 in its upper surface 50a. At the upper surface 50a of each battery module 50, the end face of each of the battery cells 52 is exposed through the opening 51. Each of the battery cells 52 is a pouch-type battery (also referred to as a laminated battery). Each of the battery cells 52 has a flat shape. The battery cells 52 are stacked in the thickness direction (the right and left direction in FIG. 3). The battery cells 52 are restrained by a securing band 54 in a state compressed in the stacking direction. The battery module 50 has a positive terminal 60a and a negative terminal 60b on one end side in a direction (the front and rear direction in FIG. 3) perpendicular to the stacking direction of the battery cells 52. The battery module 50 has a module casing 56 accommodating the battery cells 52. The opening 51 is defined by the module casing 56. The module casing 56 is made of, for example, a resin.

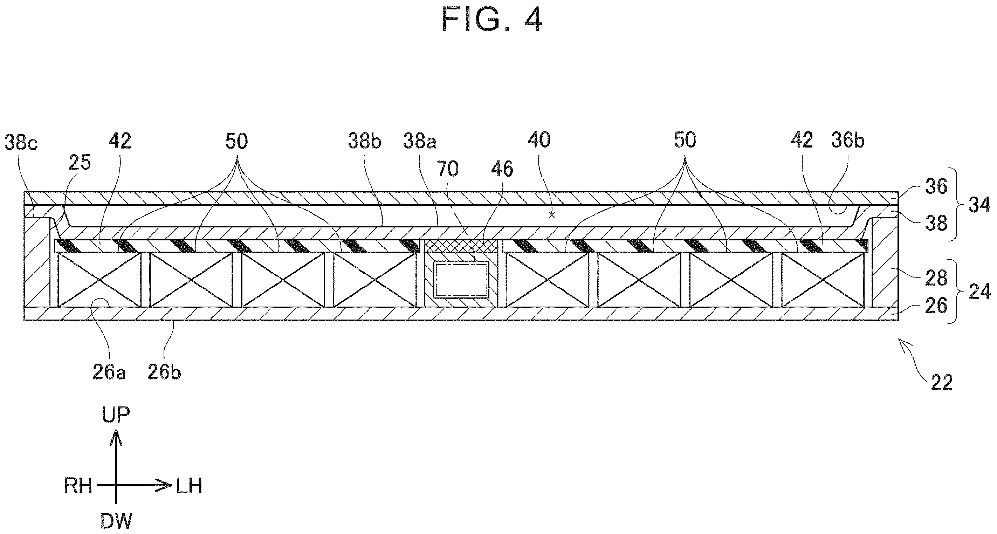

The housing 22 is made of a metal, such as aluminum. As shown in FIG. 2 and FIG. 4, the housing 22 includes a housing body 24 and a plurality of beams 30a, 30b, 30c, 32. The housing body 24 has a bottom wall 26 and a peripheral wall 28. The peripheral wall 28 is upright from the outer peripheral edge 26e of the bottom wall 26. The battery modules 50 are disposed on the upper surface 26a of the bottom wall 26. The bottom wall 26 supports the battery modules 50 from below. The peripheral wall 28 extends all around the outer peripheral edge 26e of the bottom wall 26. The housing body 24 has an opening 25 that is open upward. The opening 25 is defined by the inner surface of the peripheral wall 28. The protective panel 44 is fixed to the lower surface 26b of the bottom wall 26. The protective panel 44 is a protective member and covers the bottom wall 26 from below. Although not shown, the protective panel 44 is a plate member having a plurality of ribs. The protective panel 44 is made of, for example, a resin.

The beams 30a, 30b, 30c, 32 are framework members of the housing 22. The beams 30a, 30b, 30c, 32 extend along the upper surface 26a of the bottom wall 26. The beams 30a, 30b, 30c, 32 include a plurality of first beams 30a, 30b, 30c, and a second beam 32. Each of the first beams 30a, 30b, 30c extends in the right and left direction so as to cross the upper surface 26a of the bottom wall 26. Each of the first beams 30a, 30b, 30c extends from the left-side peripheral wall 28 to the right-side peripheral wall 28. The second beam 32 extends in the front and rear direction so as to cross the upper surface 26a of the bottom wall 26. The first beams 30a, 30b, 30c are arranged at intervals from each other in the front and rear direction. The second beam 32 is disposed at the center of the bottom wall 26 in the right and left direction. Each of the first beams 30a, 30b, 30c (hereinafter, referred to as the first beams 30) is disposed orthogonally to the second beam 32. As shown in FIG. 2, each of the first beams 30 extends across the second beam 32. The first beams 30 and the second beam 32 are formed so as to be engageable with each other. The beams 30, 32 are fixed to the upper surface 26a of the bottom wall 26.

As shown in FIG. 2 and FIG. 4, the cooler 34 is disposed above the module casings 56. The cooler 34 includes an upper panel 36 and a lower panel 38 that face each other in the up and down direction. Each of the upper panel 36 and the lower panel 38 is a plate-shaped member. The upper panel 36 and the lower panel 38 are joined to each other. Channels 40 for circulating a refrigerant are defined between the upper panel 36 and the lower panel 38. In an example, the lower panel 38 has a corrugated shape to form the channels 40. The upper surface 38a of the lower panel 38 has a contact region 38c that comes into contact with the lower surface 36b of the upper panel 36, and a recessed region 38b that is recessed downward from the contact region 38c. The temperature of the battery modules 50 disposed below the cooler 34 is reduced by the flow of the refrigerant through the channels 40.

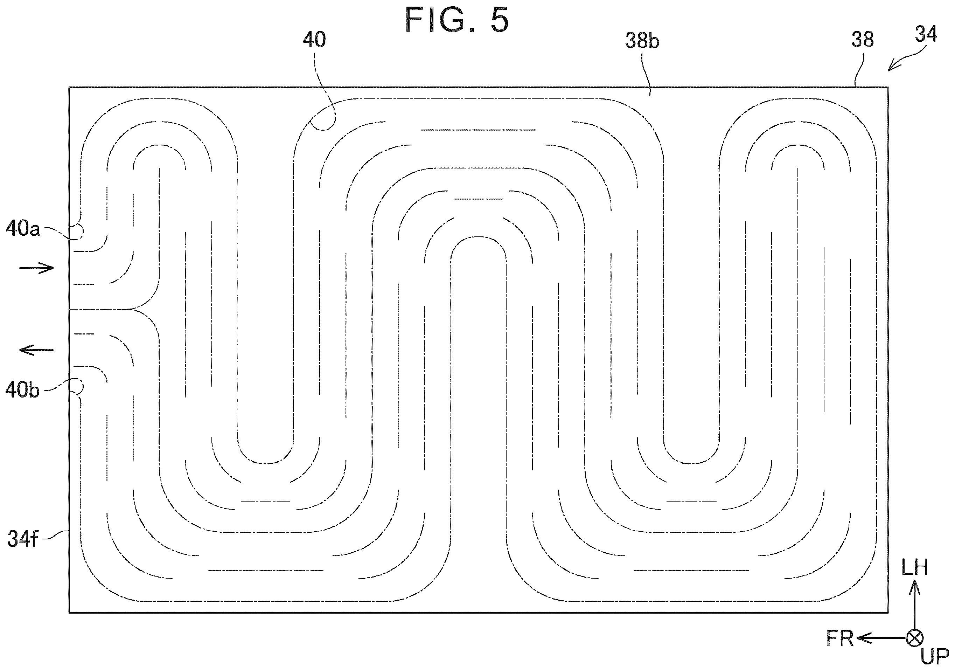

FIG. 5 shows a view of the cooler 34 from below. In FIG. 5, the channels 40 formed inside the cooler 34 are indicated by the alternate long and short dashed lines. As shown in FIG. 5, a supply port 40a through which a heat medium is supplied to the channels 40 and a discharge port 40b through which the heat medium is discharged from the channels 40 are disposed at the front end 34f of the cooler 34. The channels 40 extend in a meandering manner from the supply port 40a to the discharge port 40b.

As shown in FIG. 2 and FIG. 4, a plurality of heat transfer materials 42 is disposed between the battery modules 50 and the cooler 34. However, the number of heat transfer materials 42 is not limited to multiple and may be one. Each of the heat transfer materials 42 is made of, for example, a resin that is excellent in thermal conductivity. Each of the heat transfer materials 42 is formed by using, for example, silicone resin. With this configuration, heat generated by the battery cells 52 in the battery modules 50 can be efficiently transferred to the cooler 34. In an example, each of the heat transfer materials 42 is a pad member. Each of the heat transfer materials 42 is a material excellent in flexibility and fills the gap between the battery modules 50 and the cooler 34. The cooler 34 is disposed so as to close the opening 25 of the housing body 24 from above. In other words, the cooler 34 also functions as the upper wall of the housing 22. The cooler 34 is made of a metal, such as aluminum. In a modification, different from the cooler 34, a cover member that constitutes the upper wall of the housing 22 may be disposed above or below the cooler 34.

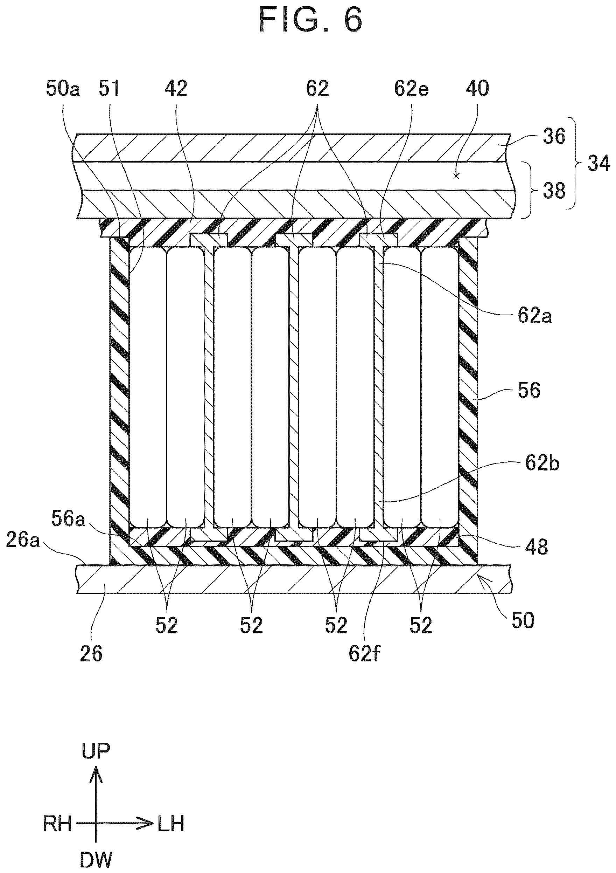

Although described above, as shown in FIG. 6, each of the battery modules 50 is disposed on the upper surface 26a of the bottom wall 26 of the housing 22, and the battery cells 52 are exposed through the opening 51 on the upper surface 50a of each of the battery modules 50. In other words, the upper part of the module casing 56 is open toward the cooler 34. Each of the battery cells 52 is in contact with a corresponding one of the heat transfer materials 42.

As shown in FIG. 3 and FIG. 6, each of the battery modules 50 includes a plurality of heat transfer plates 62. However, the number of heat transfer plates 62 is not limited to multiple and may be one. Each of the heat transfer plates 62 is disposed between the battery cells 52. With this configuration, heat generated by the battery cells 52 in the battery module 50 can be efficiently transferred to the cooler 34. The arrangement of the heat transfer plates 62 is not limited. The heat transfer plate 62 may be disposed between any one or more pairs of adjacent battery cells 52 among the battery cells 52. The heat transfer plate 62 may be disposed between every pair of adjacent battery cells 52 among the battery cells 52. However, in a modification, each of the battery modules 50 does not need to include one or more of the heat transfer plates 62.

Each of the heat transfer plates 62 has an upper part 62a and a lower part 62b. The upper part 62a is part of the heat transfer plate 62, located above the central position in the up and down direction of the heat transfer plate 62, and the lower part 62b is part of the heat transfer plate 62, located below the central position in the up and down direction. The upper part 62a of each of the heat transfer plates 62 projects upward between the battery cells 52 and is in contact with the heat transfer material 42. With this configuration, heat generated by the battery cells 52 in the battery module 50 can be more efficiently transferred to the cooler 34. The upper part 62a of each of the heat transfer plates 62 has an extended portion 62e that extends along the cooler 34. With this configuration, the heat transfer plate 62 can be brought into contact with the heat transfer material 42 over a larger area. As a result, heat generated by the battery cells 52 can be more efficiently transferred to the cooler 34. In an example, the extended portion 62e of each of the heat transfer plates 62 extends to both sides in the right and left direction from a position where the extended portion 62e projects upward between the battery cells 52. The lower part 62b of each of the heat transfer plates 62 also has a similar extended portion 62f to the upper part 62a.

In one example, the battery cells 52 are fixed to the bottom surface 56a of the module casing 56 with adhesive 48. The adhesive 48 is made of, for example, a resin. The lower part 62b (that is, the extended portion 62f in the present embodiment) of the heat transfer plate 62 may be in contact with the bottom surface 56a via the adhesive 48, or may be in direct contact with the bottom surface 56a.

As shown in FIG. 4, the heat insulating material 46 is disposed between the second beam 32 of the housing 22 and the cooler 34. The heat insulating material 46 is, for example, a sheet-shaped or plate-shaped member and is made of a resin that is excellent in heat insulating properties. The heat insulating material 46 is formed by using, for example, urethane resin. In an example, an electric cable 70 electrically connected to at least one of the battery modules 50 is disposed inside the second beam 32.

As described above, in the present embodiment, each of the module casings 56 supports the battery cells 52 from below. With this configuration, each of the module casings 56 can effectively protect the battery cells 52 from external forces applied from below. In addition, the cooler 34 is disposed above the battery modules 50, and the upper part of each of the module casings 56 is open toward the cooler 34. With this configuration, the cooler 34 can effectively cool each of the battery cells 52 without being hindered by the module casings 56. As a result, both cooling of the battery cells 52 and protection from external forces are achieved.

Furthermore, in the present embodiment, the heat insulating material 46 is disposed between the second beam 32 of the housing 22 and the cooler 34. In the housing 22, the second beam 32 is located at the center in the right and left direction of the housing 22. In other words, a space where the battery modules 50 are not disposed is provided in the housing 22 by the second beam 32. In this way, the space where the battery modules 50 are not disposed does not need to be cooled by the cooler 34. By disposing the heat insulating material 46 in the range facing such a space on the lower surface 34b of the cooler 34, unnecessary heat absorption to the cooler 34 is reduced. As a result, the cooling capacity of the cooler 34 can be relatively increased in the range facing the battery modules 50. The location where the heat insulating material 46 is provided is not limited to a location above the second beam 32, and the heat insulating material 46 may be disposed at another location where the battery modules 50 are not disposed.

In addition, in the present embodiment, the heat transfer materials 42 are provided in the range facing the battery modules 50 on the lower surface of the cooler 34. In this case, the coefficient of thermal conductivity of the heat transfer material 42 is higher than the coefficient of thermal conductivity of the heat insulating material 46. With this configuration, in the range facing the battery modules 50, heat generated by the battery cells 52 can be more efficiently transferred to the cooler 34. As a result, the cooling capacity of the cooler 34 can be further increased.

In addition, in the present embodiment, the electric cable 70 that is electrically connected to at least one of the battery modules 50 is disposed inside the second beam 32. Condensation is also suppressed in the range where the heat insulating material 46 is provided on the lower surface 34b of the cooler 34. Therefore, when the electric cable 70 is disposed below the range where the heat insulating material 46 is provided, falling of water droplets that have condensed on the cooler 34 to the electric cable 70 can be avoided or suppressed.

Although described above, the space where the battery modules 50 are not disposed is formed by the second beam 32 that is the framework member of the housing 22. The second beam 32 is located between the two battery modules 50, and experiences an increase in temperature due to heat transferred from the battery modules 50. The second beam 32 that is high in temperature heats a refrigerant flowing through the cooler 34, which may reduce the cooling capacity of the cooler 34 for the battery modules 50. In this regard, when the heat insulating material 46 is provided in the range facing the second beam 32 on the lower surface 34b of the cooler 34, heating of the refrigerant flowing through the cooler 34 by the high-temperature second beam 32 is suppressed. The heat insulating material 46 may be disposed not only on the second beam 32 but also between the first beams 30 and the cooler 34.

The refrigerant is an example of a "heat medium" according to the technology of the specification. The second beam 32 is an example of a "framework member" according to the technology of the specification.

The embodiments of the technology have been described in detail above; however, these are only illustrative and are not intended to limit the appended claims. The technology described in the appended claims also encompasses various modifications and changes from the specific examples illustrated above.

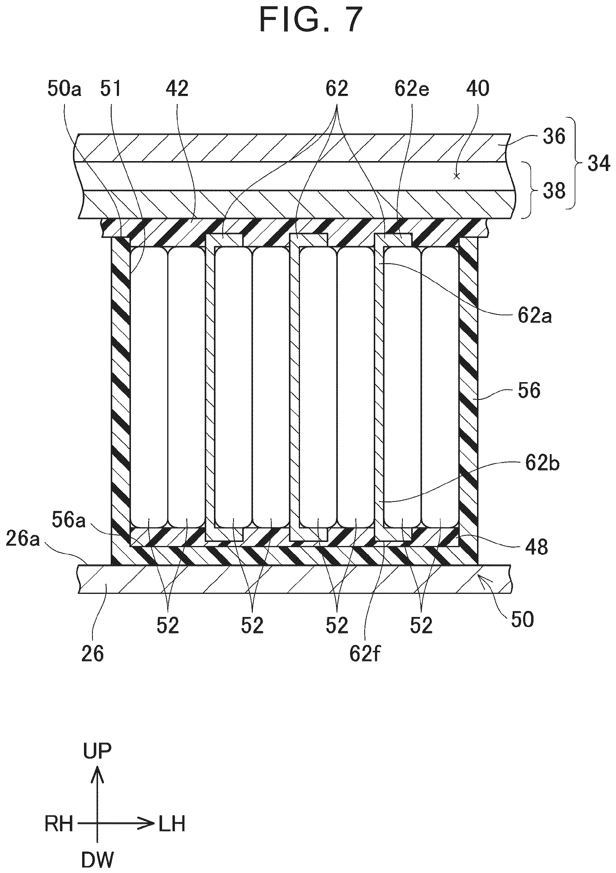

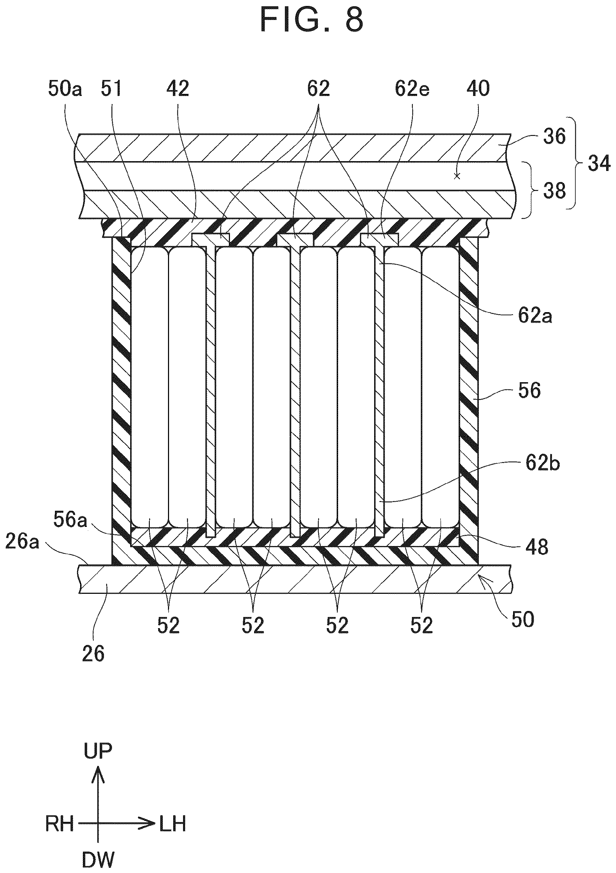

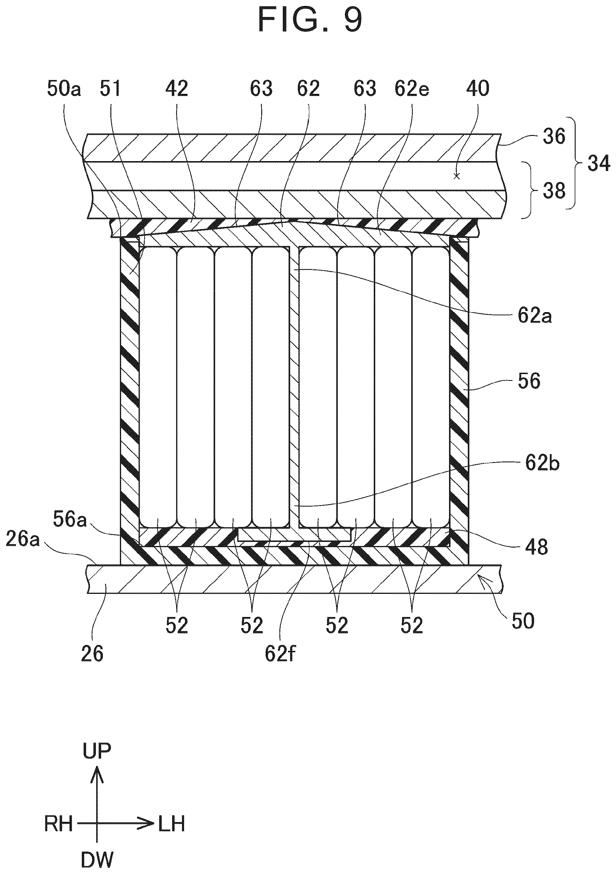

The heat transfer plate 62 is not limited to the configuration of the above-described embodiment. Modifications of the heat transfer plate 62 will be described with reference to FIG. 7 to FIG. 9. The extended portions 62e, 62f of the heat transfer plate 62 do not need to extend to both sides in the right and left direction from a location where the extended portions 62e, 62f project upward or downward between the battery cells 52. As shown in FIG. 7, the extended portions 62e, 62f may extend to any one side in the right and left direction (to the left-hand side in FIG. 7, that is, the right-hand side of the drawing sheet in FIG. 7). As shown in FIG. 8, in another modification, the lower part 62b of the heat transfer plate 62 does not need to have the extended portion 62f. As shown in FIG. 9, in another modification, the heat transfer plate 62 may have the extended portion 62e inclined relative to the horizontal direction. With this configuration, water droplets that have condensed at the extended portion 62e or water droplets that have condensed on the cooler 34 can be collected at specific locations by the slope of the extended portion 62e. As a result, falling of water droplets caused by condensation from the extended portion 62e or falling of the water droplets from the extended portion 62e to unintended locations can be avoided or suppressed. The specific configuration of the extended portion 62e is not limited; however, the extended portion 62e may have inclined surfaces 63 inclined downward from the location where the extended portion 62e projects upward between the battery cells 52 toward both sides in the right and left direction. The inclined surface 63 may reach the outside of the module casing 56. As a result, water droplets caused by condensation can be guided to the outside of the module casing 56.

The battery pack does not need to include the protective panel 44. In this case, the housing 22 of the battery pack may be disposed at the lower part of the vehicle body 12 of the vehicle 10, the lower part being open to a road surface. With this configuration, unintended external forces may be applied to the battery pack from below due to, for example, contact with a road surface or an obstacle on the road surface. In such a case, the battery pack can effectively protect the battery cells 52 from external forces applied from below.

The technical elements described in the specification or the drawings exhibit technical usability solely or in various combinations and are not limited to combinations of the appended claims at the time of filing the application. The technology illustrated in the specification and the drawings can achieve multiple purposes at the same time and has technical usability by achieving one of those purposes.

## Claims

1. A battery pack (20) comprising:
at least one battery module (50); and
a cooler (34) disposed above the at least one battery module (50), wherein
the at least one battery module (50) includes
a plurality of pouch-type battery cells (52), and
a module casing (56) supporting the plurality of pouch-type battery cells (52) from below, an upper part of the module casing (56) being open.

2. The battery pack (20) according to claim 1, further comprising a heat transfer material (42) provided between the at least one battery module (50) and the cooler (34).

3. The battery pack (20) according to claim 2, wherein at least one of the plurality of pouch-type battery cells (52) is in contact with the heat transfer material (42).

4. The battery pack (20) according to claim 2, wherein:
the at least one battery module (50) further includes a heat transfer plate (62) disposed between the plurality of pouch-type battery cells (52); and
an upper part (62a) of the heat transfer plate (62) projects upward between the plurality of pouch-type battery cells (52) and is in contact with the heat transfer material (42).

5. The battery pack (20) according to claim 4, wherein the upper part (62a) of the heat transfer plate (62) has an extended portion (62e) that extends along the cooler (34).

6. The battery pack (20) according to claim 5, wherein the extended portion (62e) is inclined relative to a horizontal direction.

7. The battery pack (20) according to any one of claims 1 to 6, further comprising a heat insulating material (46) provided in a range facing a space on a lower surface of the cooler (34), wherein
the at least one battery module (50) includes two battery modules (50) adjacent to each other with the space between the two battery modules (50).

8. The battery pack (20) according to claim 7, further comprising a heat transfer material (42) provided in a range facing the two battery modules (50) on the lower surface of the cooler (34), wherein
a coefficient of thermal conductivity of the heat transfer material (42) is higher than a coefficient of thermal conductivity of the heat insulating material (46).

9. The battery pack (20) according to claim 7 or 8, further comprising an electric cable (70) disposed in the space and electrically connected to the at least one battery module (50).

10. The battery pack (20) according to any one of claims 7 to 9, further comprising a housing (22) accommodating the two battery modules (50), wherein
a framework member (30a, 30b, 30c, 32) of the housing (22) is disposed in a clearance between the two battery modules (50).

11. A vehicle (10) configured to travel on a road surface, the vehicle (10) comprising:
a vehicle body (12); and
the battery pack (20) according to any one of claims 1 to 10, supported by the vehicle body (12), wherein
the battery pack (20) is disposed at a lower part of the vehicle body (12), the lower part being open toward the road surface.
